# EUROPEAN PATENT APPLICATION

(11) **EP 3 038 288 A1**
(43) Date of publication of application: **29.06.2016**
(21) Application number: 14844770.9
(22) Date of filing: 04.05.2014
(51) Int. Cl.: H04L 9/28

(54) **HIGH-EFFICIENCY ADAPTIVE MODULAR DATA ENCRYPTION METHOD AND SYSTEM THEREOF**

(30) Priority: 16.09.2013 CN 201310422796
(71) Applicant: Bloombase Technologies Limited, Hong Kong (HK)
(72) Inventor: Bloombase Technologies Limited, Hong Kong (HK)
(74) Representative: Sun, Yiming
(86) International application number: PCT/CN2014/076750
(87) International publication number: WO 2015/035792

(57) **Abstract**

A method for high-efficiency self-adaptive modular data encryption is provided. The method includes: acquiring sizes of file blocks of an operating system, an application program and a document system; adjusting a size of a self-adaptive encrypted data block according to the sizes of the file blocks; partitioning data into a plurality of data blocks; and encrypting the data blocks according to the size of the self-adaptive encrypted data block. A system for high-efficiency self-adaptive modular data encryption is also provided. In encryption and decryption processes, partitioning of data blocks is directly related to data processing speed and efficiency. The self-adaptive system of the present invention is configured to partition data blocks and to automatically adjust and match sizes of encrypted blocks according to the operation system, the application program and the document system environment, thereby greatly improving the speed and efficiency of data encryption and decryption processes.

## Description

### FIELD OF THE INVENTION

The present invention relates to a data encryption method and system, and more particularly to a method and system for high-efficiency self-adaptive modular data encryption.

### BACKGROUND OF THE INVENTION

Data encryption and decryption are to convert a message (also known as plain text) into a meaningless message (or cipher text) by encryption means, and that receiver of the message converts the cipher text into plain text by decryption means. Encryption technology is the cornerstone of network security. With the rapid development of information technology, data encryption and decryption have received more and more attention nowadays.

Computer storable data, such as texts, voices, videos and images, are usually comprised of multiple bytes, each of which is comprised of sixteen-bit binary data. These binary data is also data subjects that are processed by various operating systems, application programs and document storage systems. However, the ways in which data are processed vary by influencing factors such as different program designers, different regional or field design requirements, and hardware limitations. For instance, inconsistent data length in a single read and inconsistent file block size in a single run would cause incompatibility in data processing under different operating systems, application programs and document systems. The conventional way in which incompatibility issues are dealt in the field of data encryption and decryption has been inefficient.

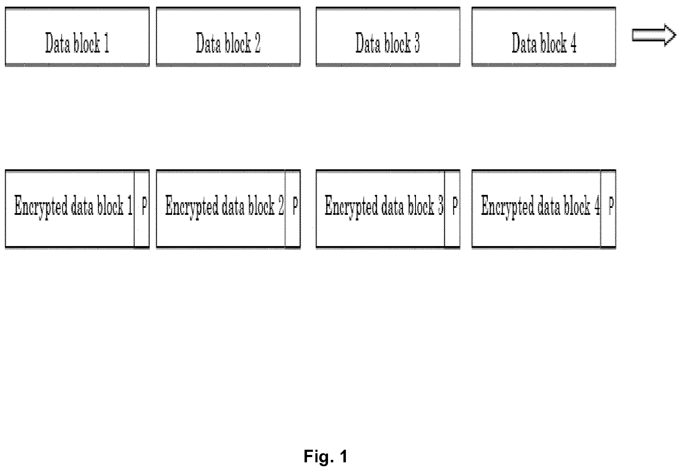

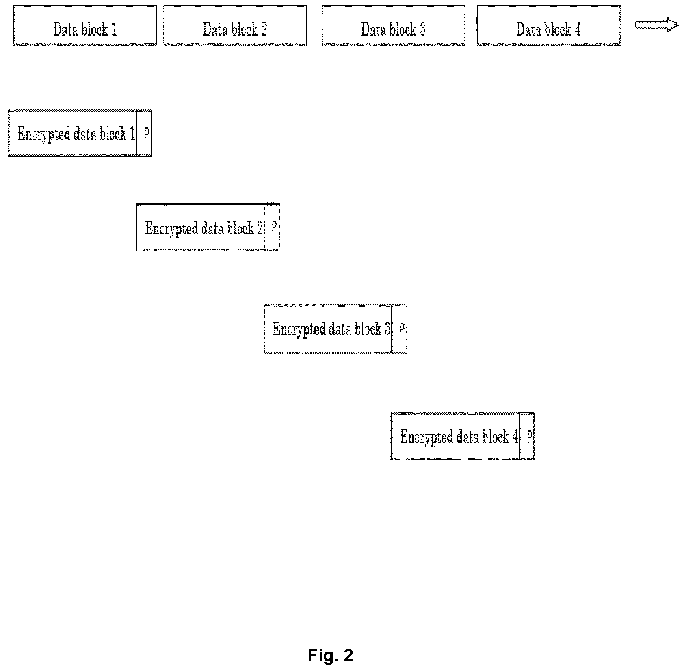

Conventional encryption algorithms process data according to partitioned data blocks: firstly, raw data (such as plain text) is partitioned into a plurality of data blocks, which are then encrypted to obtain data blocks (namely encrypted data blocks or cipher text) with fixed-sizes. However, realistically, there are numerous operating systems, virtual platforms and application programs, and the sizes of file blocks they can handle are different. Different operating systems, virtual platforms and application programs would lead to different partitions of system data blocks. Therefore, whether serial encrypted data blocks (as shown in Fig. 1) or parallel encrypted data blocks (as shown in Fig. 2) are adopted, a patch block (P) would have to be introduced to match the size of the processing data block. Since the size of encrypted data blocks are fixed, repeatedly performing data read to meet the requirement of block matching is needed when the encrypted data blocks are defined too large; otherwise, repeatedly data read and write is needed to meet the definition of data blocks when the encrypted data blocks are defined too small. Both instances would result in waste of processing time.

### SUMMARY OF THE INVENTION

The present invention provides a safe and effective data encryption method and system with improved encryption and decryption efficiencies.

In order to provide a high-efficiency self-adaptive modular data encryption method, the present invention introduces the following technical solution. The method includes :
Step 1: acquiring system environment parameters; specifically, acquiring sizes of file blocks of an operating system, an application program and a document system;
Step 2: adjusting a self-adaptive encrypted data block; specifically, adjusting a size of a self-adaptive encrypted data block according to sizes of the file blocks of the operating system, the application programs and the document system;
Step 3: partitioning data; specifically, partitioning data that requires encryption into a plurality of data blocks; and
Step 4: encrypting the data blocks; specifically, encrypting the data blocks according to the size of the self-adaptive encrypted data block.

Preferably, a ratio of a size of the plurality of data blocks to the size of the self-adaptive encrypted data block is 1:1, 1: n or n: 1, wherein n is an integer.

Preferably, the step of adjusting the size of the self-adaptive encrypted data block includes:
A. if all of the file blocks of the operating system, the application program and the document system have an equal size of N, adjusting the size of the self-adaptive encrypted data block to N;
B. if two of the file blocks of the operating system, the application program and the document system have an equal size of M, adjusting the size of the self-adaptive encrypted data block to M; and
C. if none of the file blocks of the operating system, the application program and the document system has an equal size, adjusting the size of the self-adaptive encrypted data block to equal the size of any of the file blocks.

Preferably, if none of the file blocks of the operating system, the application program and the document system has an equal size, the size of the self-adaptive encrypted data block is adjusted according to a manual setting or a computer default setting.

Preferably, if none of the file blocks of the operating system, the application program and the document system has an equal size, the size of the self-adaptive encrypted data block is adjusted to equal the size of the file block of the application program.

Preferably, the data encryption method is performed in an operating system or a virtual platform, wherein the operating system is selected from the group consisting of Linux, Unix, Window, Mac OS, Android, 0S400 and Mainframe/zOS, and the virtual platform is selected from the group consisting of VMware, Citrix Xen, KVM, PowerVM, Hyper_V and VirtualBox.

In order to provide a system for high-efficiency self-adaptive modular data encryption, the present invention introduces the following technical solution. The system includes :
an acquiring unit, configured to acquire sizes of the file blocks of the operating system, the application program and the document system;
an adjusting unit, configured to adjust a size of a self-adaptive encrypted data block according to the sizes of the file blocks of the operating system, the application program and the document system;
a partitioning unit, configured to partition data that requires encryption into a plurality of data blocks; and
an encrypting unit, configured to encrypt the plurality of data blocks according to the size of the self-adaptive encrypted data block.

Preferably, a ratio of a size of the plurality of data blocks to the size of the self-adaptive encrypted data block is 1:1, 1: n or n: 1, wherein n is an integer.

Preferably, the adjusting unit includes:
a subunit A, configured to adjust the size of the self-adaptive encrypted data block to N if all of the file blocks of the operating system, the application program and the document system have an equal size of N,;
a subunit B, configured to adjust the size of the self-adaptive encrypted data block to M if two of the file blocks of the operating system, the application program and the document system have an equal size of M; and
a subunit C, configured to adjust the size of the self-adaptive encrypted data block to equal the size of any of the file blocks of the operating system, the application program and the document system if none of the file blocks has an equal size.

Preferably, the subunit C is configured to adjust the size of the self-adaptive encrypted data block according to a manual setting or a computer default setting.

Preferably, the subunit C is configured to adjust the size of the self-adaptive encrypted data block to equal the size of the file block of the application program.

Preferably, the data encryption system is adopted to an operating system or a virtual platform, wherein the operating system is selected from the group consisting of Linus, Unix, Window, Mac OS, Android, 0S400 and Mainframe/zOS, and the virtual platform is selected from the group consisting of VMware, Citrix Xen, KVM, PowerVM, Hyper_V and Virtual Box.

As compared with the prior art, the present invention is safe and effective and can increase the efficiency of data encryption and decryption.

As compared with the prior art, the present invention provides a highly-effective method that can be effectively used for big data and cloud security. The present invention adopts a self-adaptive system that partitions the data blocks and automatically or manually adjusts the size of the self-adaptive encrypted data block to match the environmental conditions according to the operating system, the application program and the document system. Therefore, the size of the self-adaptive encrypted data block matches the file blocks of the operating environment, thus saving time for data reading, processing and saving under the system environment.

### BRIEF DESCRIPTION OF THE DRAWINGS

FIG. 1 is a schematic diagram of blocks for serial data encryption in accordance with the prior art;
FIG. 2 is a schematic diagram of blocks for parallel data encryption in accordance with the prior art; and
FIG. 3 is a schematic diagram of blocks for data encryption in accordance with an embodiment of the present invention.

### DETAILED DESCRIPTION OF PREFERRED EMBODIMENTS

The present invention will now be described more specifically with reference to the drawings.

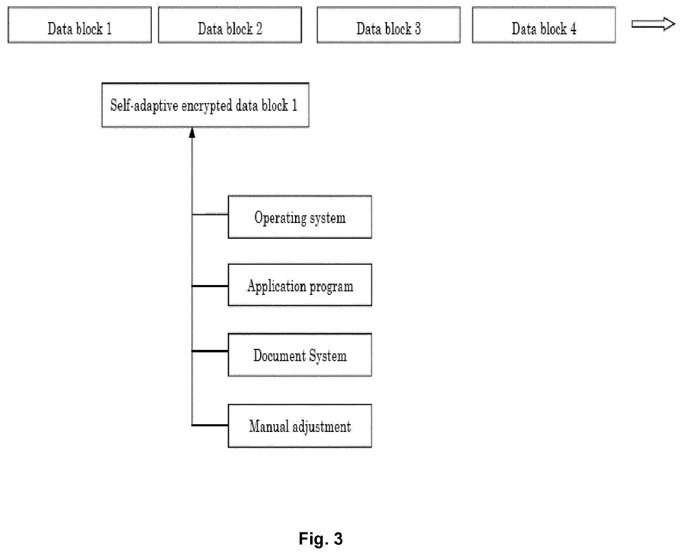

Referring now to Fig. 3, which illustrates the method and system for data encryption in accordance with an embodiment of the present invention.

In the embodiment as shown in Fig. 3, the method for adjusting a self-adaptive encrypted data block includes: acquiring sizes of file blocks of a operating system, an application program and a document system; adjusting a size of a self-adaptive encrypted data block according to the sizes of the file blocks of the operating system, the application program and the document system; partitioning data that requires encryption into a plurality of data blocks; and encrypting the data blocks according to the size of the self-adaptive encrypted data block.

In Fig. 3, the self-adaptive encrypted data block may be adjusted automatically according to the size of file blocks of the operating system, the application program and the document system, or adjusted manually according to the environment.

Since the size of the self-adaptive encrypted data block is adjusted automatically or manually to match the modules of the application program, document system and operating system, the method of the present embodiment greatly increases the read and write speeds for operational data, therefore avoiding the following situations: waste of data processing time to repeatedly perform data read and write so as to meet the requirement of block matching when definition of the encrypted data is too large or to complete data matching when definition of the encrypted data is too small.

Automatically or manually adjusting the size of the self-adaptive encrypted data block is referred to as the computer automatically defining the size of the encrypted data according to (1) the size of the file block of the operating system; (2) the size of the file block of the application program; and (3) the size of the file block of the document system. If (1) through (3) are equal in size and the size is N, the size of the encrypted data block would be defined as N; if two among (1) through (3) are equal in size and the size of the two is M, the size of encrypted data block would be defined as M; otherwise, if (1) through (3) are completely different in size, the size of the encrypted data block would be defined based on user preferences by manually setting the size to equal any of (1) through (3). Without any specific request from the user, the size of the encrypted data block would be automatically set to equal to (2); that is, the size of the encrypted data block would be automatically set to equal to the size of the application program, so that user experiences may be enhanced.

Improvement in encryption and decryption speeds of the present invention is resulted from saving repeated read and write operations, from achieving optimal computation efficiency by performing block matching, or from algorithm optimization.

The operating system referred to in the present invention includes Linux, Unix, Window, Mac OS, Android, 0S400, Mainframe/zOS and other software platforms. The operating system also includes virtual platforms, such as VMware, Citrix Xen, KVM, PowerVM, Hyper_V, VirtualBox and so on. As the aforementioned operating systems or virtual platforms are widely used in the prior art, performance may be improved when the present invention is applied to these existing systems.

The application program referred to in the present invention includes various server application programs, such as file system, data base system, data warehouse, file management system, data analysis system, enterprise resource management, customer relation management, mail system, web page server, application server, middleware and so on.

According to the disclosure and teaching of above-mentioned specification, those skilled in the art of the present invention can still make changes and modifications to above-mentioned embodiment, therefore, the scope of the present invention is not limited to the specific embodiments disclosed and described above, and all those modifications and changes to the present invention are within the scope of the present invention as defined in the appended claims. Besides, although some specific terminologies are used in the specification, it is merely as a clarifying example and shall not be constructed as limiting the scope of the present invention in any way.

## Claims

1. A method for high-efficiency self-adaptive modular data encryption, comprising:
acquiring sizes of file blocks of an operating system, an application program and a document system;
adjusting a size of a self-adaptive encrypted data block according to the sizes of the file blocks of the operating system, the application program and the document system;
partitioning data that requires encryption into a plurality of data blocks; and
encrypting the plurality of data blocks according to the size of the self-adaptive encrypted data block.

2. The method for high-efficiency self-adaptive modular data encryption according to claim 1, wherein a ratio of a size of the plurality of data blocks to the size of the self-adaptive encrypted data block is 1:1, 1: n or n: 1, wherein n is an integer.

3. The method for high-efficiency self-adaptive modular data encryption according to claim 1, wherein the step of adjusting the size of the self-adaptive encrypted data block comprises:
if all of the file blocks of the operating system, the application program and the document system have an equal size of N, adjusting the size of the self-adaptive encrypted data block to N;
if two of the file blocks of the operating system, the application program and the document system have an equal size of M, adjusting the size of the self-adaptive encrypted data block to M; and
if none of the file blocks of the operating system, the application program and the document system has an equal size, adjusting the size of the self-adaptive encrypted data block to equal the size of any of the file blocks.

4. The method for high-efficiency self-adaptive modular data encryption according to claim 3, wherein if none of the file blocks of the operating system, the application program and the document system has an equal size, the size of the self-adaptive encrypted data block is adjusted according to a manual setting or a computer default setting.

5. The method for high-efficiency self-adaptive modular data encryption according to claim 3, wherein if none of the file blocks of the operating system, the application program and the document system has an equal size, the size of the self-adaptive encrypted data block is adjusted to equal the size of the file block of the application program.

6. The method for high-efficiency self-adaptive modular data encryption according to claim 1, performed in an operating system or a virtual platform, wherein the operating system is selected from the group consisting of Linux, Unix, Window, Mac OS, Android, 0S400 and Mainframe/zOS, and the virtual platform is selected from the group consisting of VMware, Citrix Xen, KVM, PowerVM, Hyper_V and VirtualBox.

7. A system for high-efficiency self-adaptive modular data encryption, comprising:
an acquiring unit, configured to acquire sizes of file blocks of an operating system, an application program and a document system;
an adjusting unit, configured to adjust a size of a self-adaptive encrypted data block according to the sizes of the file blocks of the operating system, the application program and the document system;
a partitioning unit, configured to partition data that requires encryption into a plurality of data blocks; and
an encrypting unit, configured to encrypt the plurality of data blocks according to the size of the self-adaptive encrypted data block.

8. The system for high-efficiency self-adaptive modular data encryption according to claim 7, wherein a ratio of a size of the plurality of data blocks to the size of the self-adaptive encrypted data block is 1:1, 1: n or n: 1, wherein n is an integer.

9. The system for high-efficiency self-adaptive modular data encryption according to claim 7, wherein the adjusting unit comprises:
a subunit A, configured to adjust the size of the self-adaptive encrypted data block to N if all of the file blocks of the operating system, the application program and the document system have an equal size of N;
a subunit B, configured to adjust the size of the self-adaptive encrypted data block to M if two of the file blocks of the operating system, the application program and the document system have an equal size of M; and
a subunit C, configured to adjust the size of the self-adaptive encrypted data block to equal the size of any of the file blocks of the operating system, the application program and the document system if none of the file blocks has an equal size.

10. The system for high-efficiency self-adaptive modular data encryption according to claim 9, wherein the subunit C is configured to adjust the size of the self-adaptive encrypted data block according to a manual setting or a computer default setting.

11. The system for high-efficiency self-adaptive modular data encryption according to claim 9, wherein the subunit C is configured to adjust the size of the self-adaptive encrypted data block to equal the size of the file block of the application program.

12. The system for high-efficiency self-adaptive modular data encryption according to claim 7, adopted to an operating systems or a virtual platform, wherein the operating system is selected from the group consisting of Linux, Unix, Window, Mac OS, Android, 0S400 and Mainframe/zOS, and the virtual platform is selected from the group consisting of VMware, Citrix Xen, KVM, PowerVM, Hyper_V and VirtualBox.
